# EUROPEAN PATENT SPECIFICATION

(11) **EP 0 534 563 B1**
(45) Date of publication and mention of the grant of the patent: **28.12.1994**
(21) Application number: 92202933.5
(22) Date of filing: 24.09.1992
(51) Int. Cl.: F16L 5/02, H02G 3/22, A62C 2/06

(54) **Fire resisting system and method for passing at least one cable, tube or the like through an opening in a wall; fire resisting system and method for preventing fire from propagating along an opening in a wall**
Feuergeschützte Anordnung und Verfahren zum Einführen wenigstens eines Kabels, Rohres oder dergleichen durch eine Wandöffnung; feuergeschützte Anordnung und Verfahren zum Schutz vor Feuerausbreitung entlang einer Wandöffnung
Système résistant au feu et procédé pour introduire au moins un câble, tuyau ou similaire à travers une ouverture dans un mur; système résistant au feu et procédé pour empêcher le feu de se propager le long d'une ouverture dans un mur

(30) Priority: 27.09.1991 NL 9101637
(43) Date of publication of application: 31.03.1993
(73) Proprietor: Beele Engineering B.V., NL-7122 NZ Aalten (NL)
(72) Inventor: Beele, Johannes Alfred, NL-1716 KE Opmeer (NL)
(74) Representative: Hooiveld, Arjen Jan Winfried

(56) References cited:
- EP-A- 0 253 791
- EP-A- 0 328 366
- EP-A- 0 524 078
- DE-A- 2 627 447
- DE-C- 3 918 892

## Description

The invention relates to a fire resisting system for passing at least one cable, tube or the like through an opening in a wall.

The invention furthermore relates to a method for passing at least one cable, tube or the like through an opening in a wall, using said system.

Such a fire resisting system and such a method are known from EP-A-0 183 300.

A drawback of this known system and this known method is that in order to obtain a reasonable fire resistance, liquid- and gastightness this known system must be mounted on either side of the wall, which not only is costly and laborious, but also requires a certain amount of pre-engineering. A further drawback is that some of the fire resistance, liquid- and gastightness of the passage of the at least one cable, tube or the like will be lost when - for example in case of a fire - the temperature around the passage runs up, whereby in addition to that sheaths of electric cables or the like will melt.

The object of the invention is to provide an economical, heat resisting and fire resisting system and a method for passing at least one cable, tube or the like through a wall, without there being a possibility of sheaths of for example electric cables melting thereby.

In order to accomplish that objective a system of the kind mentioned in the introduction according to the invention includes a) first fire resisting sleeve means at least partially disposed around the at least one cable, tube or the like and at least partially disposed in the opening; and b) a plurality of second fire resisting sleeve means extending in the same direction as the first fire resisting sleeve means, and filling any remaining space in the opening. The first and second fire resistant sleeve means contain for example a fire resisting rubber, which can preferably expand under the influence of heat, so that a sufficient degree of "tightness" in the opening is realized at all times. An additional advantage of this expansion is thereby that a "passage mass" is obtained which is longer and thus better resistant to fire. Furthermore the fire resisting rubber preferably has a low smoke index, whereby smoke given off by the rubber in the presence of fire is non-toxic. The sleeve means preferably have a continuous slot, so that the sleeve means can easily be provided around cables, tubes or the like which have already been installed. Preferably the thickness of the sleeve means is such that a distance of minimally 6 mm casu quo maximally 10 mm is maintained between thin casu quo thick cables, tubes or the like. An important advantage of the use of the second fire resisting sleeve means as "fire resisting filling means" is that there is sufficient inclusion of air in the opening, so that a high degree of heat insulation is obtained.

Preferably, a frame is sealingly provided in the opening along the circumference thereof.

Advantageously, at least two first fire resisting sleeve means are at least partially disposed around the at least one cable, tube or the like in spaced-apart relationship, leaving open an intermediate space in the opening. As a result of the presence of this intermediate space, which is filled with air, a high heat insulation is obtained.

Preferably the system includes a marking means, for example in the shape of rubber bars, which can be provided in the second fire resisting sleeve means acting as "filling means", so that said bars project beyond the opening during operation and thus indicate which second fire resisting sleeve means are still available for any cables to be passed therethrough.

Advantageously, said system includes a heat resisting and/or liquid repellent material sealingly disposed at at least one open side of the opening. The presence of this heat resisting and/or liquid repellent material increases the liquid- and gastightness of the system.

A method for passing at least one cable, tube or the like through an opening in a wall according to the invention comprises the steps of a) passing the at least one cable, tube or the like through the opening; b) at least partially disposing first fire resisting sleeve means around a portion of the at least one cable, tube or the like at least partially disposed in the opening; and c) filling any remaining space in the opening by a plurality of second fire resisting sleeve means extending in the same direction as the first fire resisting sleeve means. This method preferably comprises the step of sealingly disposing a heat resisting and/or liquid repellent material at at least one open side of the opening.

Another important aspect of the invention is as follows. Numerous occasions have shown that, in case a building is on fire, fire rapidly propagates along openings in walls of the building, such as along ventilating shafts thereof. Obviously, this is a highly negative phenomenon, in view of efforts to save lives, important items in the building and the building itself. It is an object of the invention to provide a solution to this problem. Therefore, a fire resisting system and method for preventing fire from propagating along an opening in a wall (for example a ventilating shaft) is proposed, which system and method include a plurality of sleeve means at least partially disposed in said opening and disposed in side by side relationship across the opening.

German document DE-A-2.627.447 (Staudt) discloses a system for passing tubes through an opening in a wall, whereby the tubes are covered with an asbestos foam and any remaining space in the opening is filled with a spatula mass (comprising asbestos fibers) which hardens after approximately three weeks. In another embodiment according to this document the tubes are covered with the spatula mass, whereas any remaining space in the opening is filled with solid blocks made of Isoternit (a material containing asbestos, calcium and silicate) as well as with the spatula mass and an asbestos foam ("Litaflex").

The system and method known from the above German document have the following disadvantages. Asbestos material is nowadays known to have very negative effects on human health, in particular on human lungs, as a consequence whereof the use of asbestos material is forbidden by law. Moist asbestos material is prepared and applied in a very costly and cumbersome manner: at first the asbestos material as such is put into a tub filled with water, upon which these two ingredients are mixed with the help of a stirring device. The moist asbestos foam is then applied - using a spatula - around and between cables already passed through an opening in a wall, upon which the opening is "sealed" by further applying the moist asbestos foam in said opening. All the necessary materials and tools have to be transported to the working site which is often less accessible (ships, oil-rigs etcetera). Furthermore, in practice it has appeared that, before being fully hardened after three weeks the moist asbestos foam mass is pressed out between the cables that have been inserted. This seriously impairs the fire resisting properties of the known system of German document DE-A-2.627.447, for in that case - without further measures - the cables will practically rest on each other after the asbestos mass has hardened. Finally, it is (nearly) impossible to insert additional cables, tubes and the like after the moist asbestos foam mass has hardened.

European patent document EP-A-0 328 366 (Raychem) discloses a duct seal having an internal coiled sheet spring that is held in a tensioned configuration by a meltable member. The appropriate part of the duct seal is positioned in the duct and heated, preferably electrically, causing it to soften, and the member to melt, allowing the spring to cause the duct seal to expand to seal to the duct. However, this prior art document does not refer to a fire resisting system.

European patent publications EP-A-0 253 791 (Monsanto) and EP-A-0 524 078 (Electricité de France) are cited regarding present claims 8 and 10.

Document EP-A-0 253 791 describes a fire stop device having a closure for a conduit passing through an aperture extending through a wall. Fire resistant movable closure means are operatively associated with the aperture, which closure means are movable between a first retracted position and a second functional position wherein the aperture is closed-off by the closure means. Self-sustaining restraining means of a heat disposable low temperature melting metallic substance are used, the material being dispersible into a non-sustaining form when heated above the melting temperature thereof. The restraining means retains the closure means in the first position, while permitting it to move in the second position when the substance is dispersed upon being heated.

Document EP-A-0 524 078 is comprised in the state of the art according to Article 54(3) EPC. Reference is also made to Article 56 EPC, last sentence. This document discloses a fire resisting device for preventing fire to propagate along an opening in a wall, which device is provided with two metal tubes disposed in the opening at opposite sides of the wall. The tubes comprise a valve having a closing made of a fire resisting material.

The invention will be further explained with reference to figures illustrated in a drawing, wherein:
- Figure 1: is a perspective view of one embodiment of a system according to the invention;
- Figure 2: shows a diagrammatic cross-section of the system shown in Figure 1;
- Figure 3: shows a diagrammatic cross-section of a cable, tube or the like, around which two sleeves are provided;
- Figure 4: shows a diagrammatic longitudinal section of another embodiment of a system according to the invention;
- Figure 5: shows a perspective, partially exploded view of another embodiment of a system according to the invention;
- Figure 6: shows a perspective view of a sleeve in Figure 5; and
- Figure 7: shows several duct assemblies for sleeves such as in Figure 6.

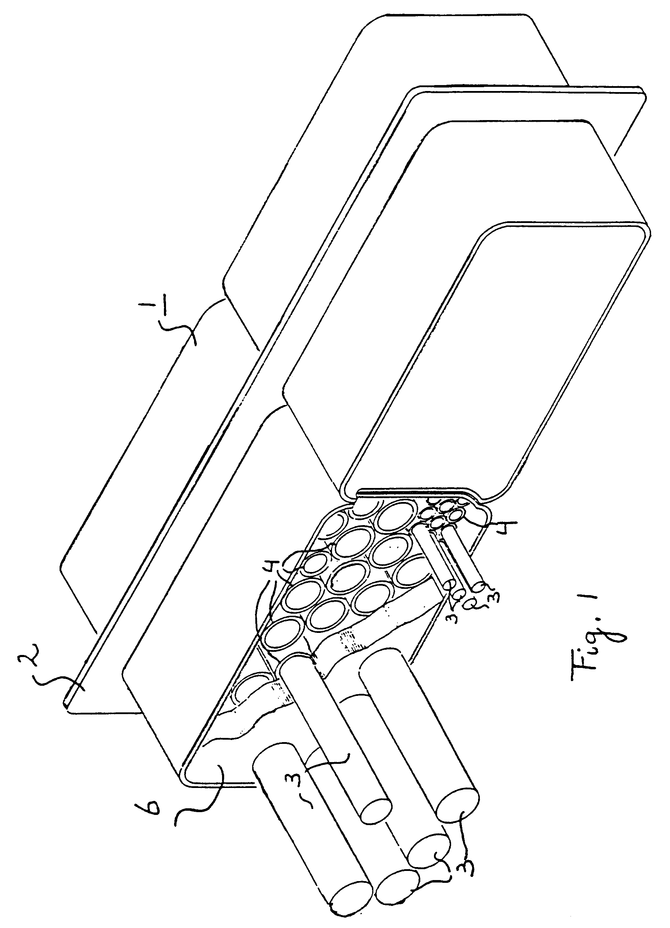

In Figure 1 a frame 1 can be distinguished, which is mounted in an opening provided in a steel deck or bulkhead of a ship. The frame 1 includes a supporting flange 2 located in the plane of the steel deck.

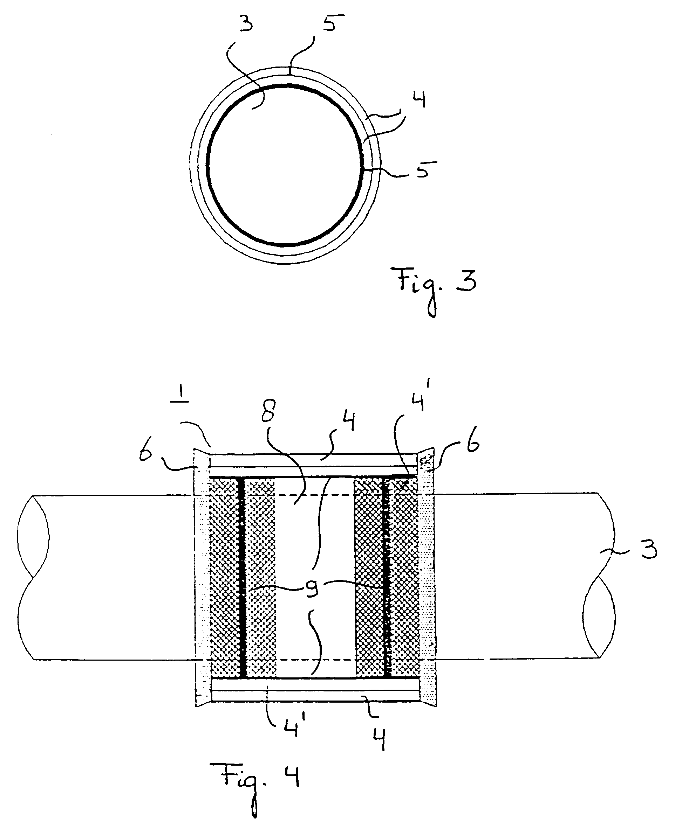

After the frame 1 has been sealingly mounted in the opening, electric lines 3 are drawn through the frame 1. Then a sleeve 4 of a fire resisting rubber is provided around each electric line 3. This can be done all the more easily because the sleeves 4 are provided with a continuous slot 5 (Figure 3). Subsequently the remaining space in the frame 1 is filled with likewise sleeves 4 of the same fire resisting rubber. Finally a fire resisting and/or liquid repellent material 6 is provided on either open side of the frame 1. Said material 6 has been selected to have good bonding properties, so that it will vulcanise, in conjunction with the air humidity, into a rubbery material within 24 hours. Possibly the outer surface of the heat resisting and/or liquid repellent material 6 can be smoothed with a wet knife. The presence of the heat resisting and/or liquid repellent material 6 guarantees a liquid- and gastight passage of the electric lines 3. Exactly because after its application the heat resisting and/or liquid-repellent material 6 is present between and in the sleeves 4 (functioning as filling means) and between the sleeves 4 (which are provided around the lines 3), a very stable entity having a high bonding capacity is obtained. It is noted that in Figure 1 the heat resisting and/or liquid repellent material 6 has been partly left out, and that the right-hand opening in the frame 1 is shown to be empty, so as not to render Figure 1 unnecessarily complicated.

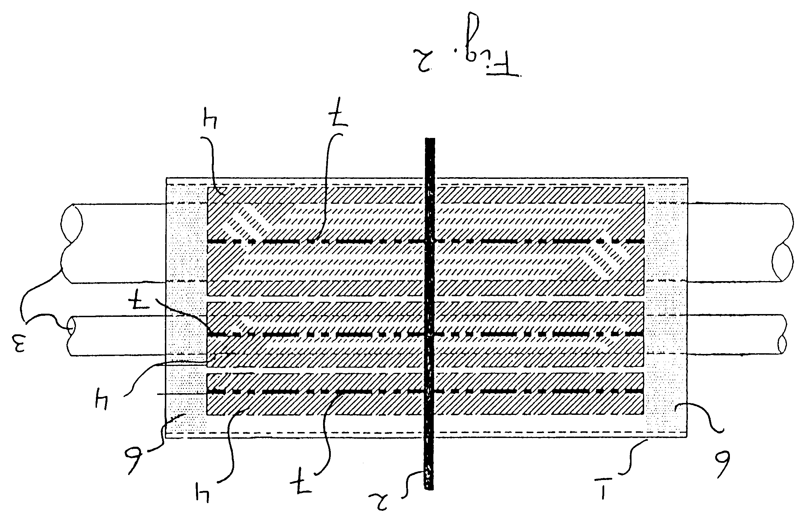

In Figure 2 those parts that correspond with the parts of Figure 1 have been given the same numerals. It is noted that the central axes of the sleeves 4 are indicated at 7. The uppermost sleeve 4 (helps to) fill(s) the space above the electric cables 3 in the frame 1.

Figure 3 shows a diagrammatic cross-section of a tube 3, around which two rubber sleeves 4 having continuous slots 5 are provided.

In Figure 4 another embodiment of a system according to the invention can be distinguished, wherein two rubber sleeves 4¹ are provided around an electric cable 3 in spaced-apart relationship, leaving open an air-insulated space 8. Iron strips 9 are provided so as to function as reinforcing means and to keep the sleeves 4¹ together. In the remaining space sleeves 4 are provided, in the manner already described herein, and a heat resisting and/or water repellent material 6 is provided.

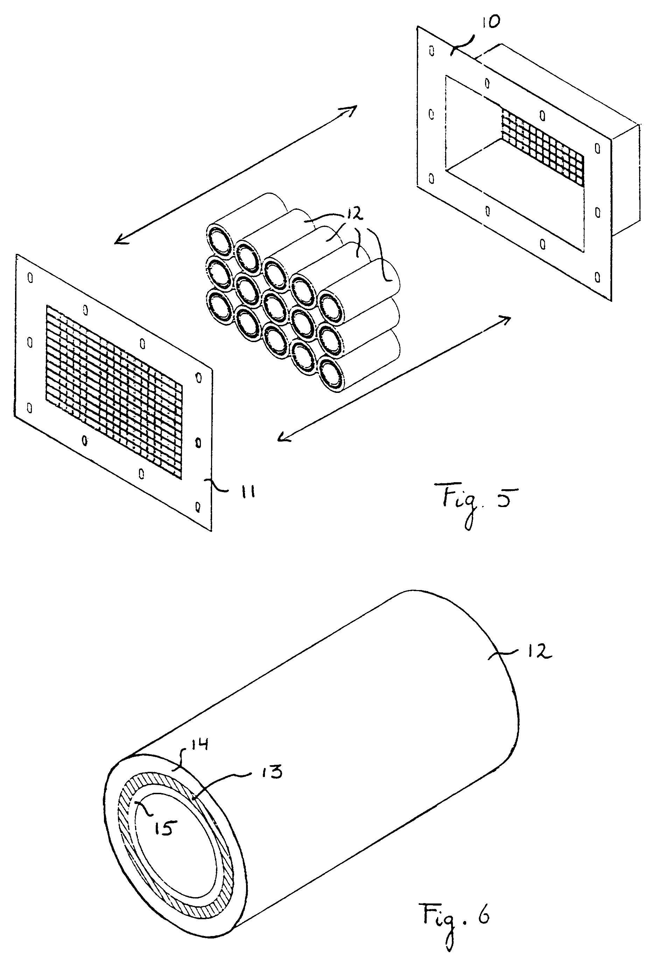

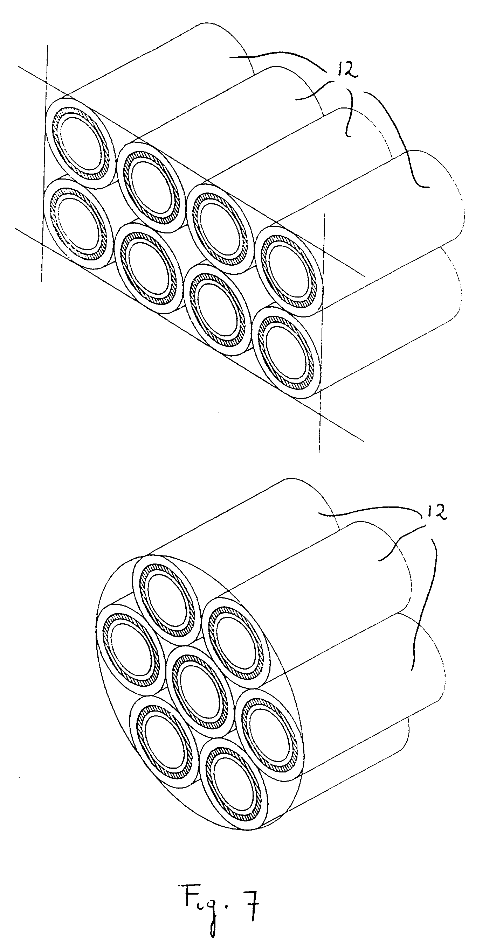

In Figure 5 another embodiment of a system according to the invention (claim 10) can be distinguished, wherein a frame 10 of a fire safe ventilation duct to be fixed against a wall, a front plate 11 of the fire safe ventilation duct to be fixed on top of a flange of the frame 10, and sleeves 12 of a fire resisting rubber (removable for cleaning from time to time) are shown. A sleeve 12 comprises a PVC-insert 13 (thickness 3.2 mm), a fire resistant rubber 14 expanding halogen free (thickness 5 mm), and a fire resistant rubber 15 expanding halogen free (thickness 4 mm) with a lower expanding rate with respect to rubber 14 (Figure 6).

In case of fire, the rubber 15 inside the ventilation sleeve 12 will expand by the flow of hot air through the opening of the sleeves 12 thereby closing off the ventilation opening of the fire safe ventilation duct. As soon as the temperature increases ther rubber 14 at the outside of the vetilation sleeves 12 will squeeze the PVC-inserts 13. The wire mesh at both sides of the frame 10 prevents the expanding rubber mass to escape. The rubber creates in this way a solid mass of rubber and plastic (hardens directly after squeezing due to the superb insulation properties of the expanded rubber), which offers excellent mechanical stability during the fire.

Figure 7 shows several duct assemblies for sleeves 12 for square/rectangular or round frames 10, respectively.

## Claims

1. A fire resisting system for passing at least one cable (3), tube or the like through an opening in a wall, which system includes
a) first fire resisting sleeve means (4) at least partially disposed around the at least one cable (3), tube or the like and at least partially disposed in the opening; and
b) a plurality of second fire resisting sleeve means (4) extending in the same direction as the first fire resisting sleeve means (4), and filling any remaining space in the opening.

2. A system according to claim 1, including a frame (1) sealingly provided in the opening along the circumference thereof.

3. A system according to claim 1 or 2, wherein at least two first fire resisting sleeve means (4') are at least partially disposed around the at least one cable (3), tube or the like, in a spaced-apart relationship leaving open an intermediate space in the opening.

4. A system according to claim 1,2 or 3, including marking means at least partially disposed in at least one of the second fire resisting sleeve means (4).

5. A system according to any one of the preceding claims, including a heat resisting and/or liquid repellent material (6) sealingly disposed at at least one open side of the opening.

6. A method for passing at least one cable (3), tube or the like through an opening in a wall, using a system according to any one of the preceding claims, which method comprises the steps of
a) passing the at least one cable (3), tube or the like through the opening;
b) at least partially disposing first fire resisting sleeve means (4) around a portion of the at least one cable (3), tube or the like at least partially disposed in the opening; and
c) filling any remaining space in the opening by a plurality of second fire resisting sleeve means (4) extending in the same direction as the first fire resisting sleeve means (4).

7. A method according to claim 6, further comprising the step of
d) sealingly disposing a heat resisting and/or liquid repellent material (6) at at least one open side of the opening.

8. A fire resisting system for preventing fire from propagating along an opening in a wall (for example a ventilation shaft) of a building, which system includes the opening in the wall and a plurality of sleeve means (12) at least partially disposed in the opening and disposed in side by side relationship across the opening.

9. A fire resisting system according to any one of the preceding claims 1-5,8, wherein the sleeve means (4,12) each includes a first sleeve member (13), a second sleeve member (15) of heat expandable material disposed internally of said first sleeve member (13) and a third sleeve member (14) of heat expandable material disposed externally on said first sleeve member (13), said second and third sleeve members (14,15) being constituted of material which expands upon heating due to fire to cause said second and third sleeve members (14,15) to expand and fill any empty space in said opening.

10. A method for preventing a fire from propagating along an opening in a wall (for example a ventilation shaft) of a building, using a system according to claim 8 or 9, which method comprises the step of at least partially disposing a plurality of sleeve means (12) in the opening, in side by side relationship across the opening.

## Patentansprüche

1. Eine feuerwiderstehende Anordnung zur Durchführung wenigstens eines Kabels (3), einer Röhre oder dergleichen durch eine Öffnung in einer Wand, wobei die Anordnung enthält:
a) erste feuerwiderstehende Hüllmittel (4), die wenigstens teilweise um das eine Kabel (3), die Röhre oder dergleichen angeordnet sind und wenigstens teilweise in der Öffnung angeordnet sind, und
b) eine Vielzahl von zweiten feuerwiderstehenden Hüllmitteln (4), die sich in der gleichen Richtung wie die ersten feuerwiderstehenden Hüllmittel (4) erstrecken und den übrigen Raum in der Öffnung füllen.

2. Ein System nach Anspruch 1, mit einem Rahmen (1), der in der Öffnung entlang deren Umfang abdichtend angeordnet ist.

3. Eine Anordnung nach Anspruch 1 oder 2, wobei wenigstens zwei erste feuerwiderstehende Hüllmittel (4') wenigstens teilweise um das wenigstens eine Kabel (3), die Röhre oder dergleichen angeordnet sind in voneinander beabstandeter Beziehung, wobei ein Zwischenraum in der Öffnung offengelassen wird.

4. Eine Anordnung nach Anspruch 1, 2 oder 3, mit Markierungsmitteln, die wenigstens teilweise in wenigstens einem der zweiten feuerwiderstehenden Hüllmittel (4) angeordnet sind.

5. Eine Anordnung nach einem der vorangehenden Ansprüche, dadurch gekennzeichnet, daß ein feuerwiderstehendes und/oder flüssigkeitsabstoßendes Material (6) abdichtend an wenigstens einer offenen Seite der Öffnung vorgesehen ist.

6. Verfahren zum Hindurchführen wenigstens eines Kabels (3), einer Röhre oder dergleichen durch eine Öffnung in einer Wand unter Benutzung einer Anordnung nach einem der vorangehenden Ansprüche, wobei das Verfahren die Schritte des
a) Hindurchführens wenigstens eines Kabels (3), einer Röhre oder dergleichen durch eine Öffnung,
b) wenigstens teilweisen Anordnens erster feuerwiderstehender Hüllmittel (4) um einen Abschnitt des wenigstens einen Kabels (3), der Röhre oder dergleichen, wenigstens teilweise angeordnet in der Öffnung, und
c) Füllens des verbleibenden Raums in der Öffnung durch eine Vielzahl von zweiten feuerwiderstehenden Hüllmitteln (4), die sich in der gleichen Richtung wie die ersten feuerwiderstehenden Hüllmittel (4) erstrecken,
enthält.

7. Verfahren nach Anspruch 6, weiter den Schritt des
d) abdichtenden Anordnens von hitzewiderstehendem und/oder flüssigkeitsabstoßendem Material (6) an der wenigstens einen offenen Seite der Öffnung
enthaltend.

8. Feuerwiderstehende Anordnung, um Feuer daran zu hindern, sich entlang einer Öffnung in einer Wand (z. B. einem Ventilationsschacht) eines Gebäudes auszubreiten, wobei das System die Öffnung in der Wand enthält und eine Vielzahl von Hüllmitteln (12), die wenigstens teilweise in der Öffnung angeordnet sind und in aneinandergereihter Beziehung über die Öffnung angeordnet sind.

9. Feuerwiderstehende Anordnung nach einem der vorangehenden Ansprüche 1 - 5 und 8, wobei die Hüllmittel (4, 12) ein erstes Hüllglied (13), ein zweites Hüllglied (15) aus sich bei Hitze ausdehnendem Material enthalten, das innerhalb des ersten Hüllgliedes (13) angeordnet ist, und ein drittes Hüllglied (14) aus sich bei Hitze ausdehnendem Material außerhalb auf dem ersten Hüllgliedes (13) angeordnet enthalten, wobei die zweiten und dritten Hüllglieder (14, 15) aus einem Material aufgebaut sind, das sich bei Erhitzung aufgrund eines Feuers ausdehnt, um die zweiten und dritten Hüllglieder (14, 15) sich ausdehnen zu lassen und den leeren Raum in der Öffnung auszufüllen.

10. Verfahren zum Verhindern, daß sich ein Feuer entlang einer Öffnung in einer Wand (z. B. einem Ventilationsschacht) eines Gebäudes ausbreitet, unter Benutzung einer Anordnung nach den Ansprüchen 8 oder 9, wobei das Verfahren den Schritt des wenigstens teilweisen Anordnens einer Vielzahl von Hüllmitteln (12) in der Öffnung enthält, die sich aneinandergereiht über die Öffnung erstrecken.

## Revendications

1. Système résistant au feu pour faire passer au moins un câble (3), tube ou analogue à travers une ouverture formée dans un mur, lequel système comprend :
a) des premiers moyens de manchon (4) résistant au feu, au moins en partie disposés autour du au moins un câble (3), tube ou analogue, au moins partiellement disposés dans l'ouverture; et
b) une pluralité de seconds moyens de manchon résistant au feu (4) s'étendant dans la même direction que les premiers moyens de manchon (4) résistant au feu, et remplissant tout l'espace restant dans l'ouverture.

2. Système selon la revendication 1, comprenant un cadre (1) monté de façon étanche dans l'ouverture le long de son périmètre.

3. Système selon la revendication 1 ou la revendication 2, dans lequel au moins deux premiers moyens de manchon (4') résistant au feu sont au moins partiellement disposés autour du au moins un câble (3), tube ou analogue, dans une relation espacée l'un par rapport à l'autre, laissant ouvert un espace intermédiaire dans l'ouverture.

4. Système selon la revendication 1, 2 ou 3, comprenant des moyens de marquage au moins en partie disposés dans au moins l'un des seconds moyens de manchon (4) résistant au feu.

5. Système selon l'une quelconque des revendications précédentes comprenant un matériau (6) résistant à la chaleur et/ou imperméable aux liquides, disposé de façon étanche sur au moins l'un des côtés ouverts de l'ouverture.

6. Procédé pour faire passer au moins un câble (3), tube ou analogue à travers une ouverture formée dans une paroi, utilisant un système selon l'une quelconque des revendications précédentes, lequel procédé comprend les étapes consistant à :
a) faire passer le au moins un câble (3) du tube ou analogue à travers l'ouverture;
b) disposer au moins partiellement des premiers moyens de manchon (4) résistant au feu autour d'une partie du au moins un câble (3), tube ou analogue au moins partiellement disposé dans l'ouverture; et
c) remplir tout l'espace restant dans l'ouverture par une pluralité de seconds moyens de manchon (4) résistant au feu s'étendant dans la même direction que les premiers moyens de manchon (4) résistant au feu.

7. Procédé suivant la revendication 6, comprenant en outre l'étape consistant à :
d) disposer de façon étanche un matériau (6) résistant à la chaleur et/ou imperméable aux liquides sur au moins l'un des côtés ouverts de l'ouverture.

8. Système résistant au feu pour empêcher le feu de se propager le long d'une ouverture formée dans un mur (par exemple une colonne de ventilation) d'un bâtiment, lequel système comprend l'ouverture formée dans le mur et une pluralité de moyens de manchon (12) au moins partiellement disposés dans l'ouverture et disposés en relation côte-à-côte à travers l'ouverture.

9. Système résistant au feu selon l'une quelconque des revendications précédentes 1 à 5, 8, dans lequel les moyens de manchon (4, 12) comprennent chacun un premier organe (13) de manchon, un second organe (15) de manchon en un matériau expansible à la chaleur disposé à l'intérieur dudit premier organe de manchon (13) et un troisième organe de manchon (14) d'un matériau expansible à la chaleur disposé à l'extérieur sur ledit premier organe de manchon (13), ledit second et ledit troisième organe de manchon (14,15) étant constitués en un matériau qui s'expanse lorsqu'il est chauffé par le feu de façon à provoquer l'expansion dudit second et dudit troisième organes de manchon et le remplissage de tout espace vide dans ladite ouverture.

10. Procédé pour empêcher la propagation d'un feu le long d'une ouverture formée dans un mur (par exemple une colonne de ventilation) d'un bâtiment, utilisant un système selon la revendication 8 ou la revendication 9, lequel procédé comprend l'étape consistant à disposer au moins partiellement une pluralité de moyens de manchon (12) dans l'ouverture en relation côte-à-côte à travers l'ouverture.
